# EUROPEAN PATENT APPLICATION

(11) **EP 1 728 702 A1**
(43) Date of publication of application: **06.12.2006**
(21) Application number: 06076061.8
(22) Date of filing: 16.05.2006
(51) Int. Cl.: B62D 1/19

(54) **Adaptive energy absorber for steering column**

(30) Priority: 01.06.2005 US 142223
(71) Applicant: Delphi Technologies, Inc., Troy, Michigan 48007 (US)
(72) Inventor: Manwaring, Martin V., Clio, MI 48420 (US); Riefe, Richard K., Saginaw, MI 48609 (US); Ravindra, Ravi, Saginaw, MI 48603 (US)
(74) Representative: Denton, Michael John

(57) **Abstract**

The invention provides a steering column assembly (10, 10a, 10b) for a vehicle. The steering column assembly (10, 10a, 10b) includes a steering column (12, 12a, 12b) operable to adjustably support a steering wheel in the vehicle. The steering column assembly (10, 10a, 10b) is moveable along a path (14, 14a, 14b) for collapsing movement relative to a vehicle in response to an impact situation. The steering column assembly (10, 10a, 10b) also includes an energy absorber (16, 16a, 16b, 16c, 16d, 16e, 16f) for dissipating energy associated with the collapsing movement of the steering column (12, 12a, 12b) along the path (14, 14a, 14b). The energy absorber (16, 16a, 16b, 16c, 16d, 16e, 16f) includes an anvil (18, 18a, 18b, 18c, 18d, 18e, 18f) fixedly disposed relative to one of the steering column (12, 12a, 12b) and the path (14, 14a, 14b). The energy absorber (16, 16a, 16b, 16c, 16d, 16e, 16f) also includes a strap (20, 20a, 20b, 20c, 20d, 20e, 20f) drawable over the anvil (18, 18a, 18b, 18c, 18d, 18e, 18f) and substantially fixedly disposed relative to the other of the steering column (12, 12a, 12b) and the path (14, 14a, 14b). The steering column assembly (10, 10a, 10b) also includes at least one quick release bolt (22, 22b, 22c, 22d) engaged with the strap (20, 20a, 20b, 20c, 20d, 20e, 20f) to selectively release the strap (20, 20a, 20b, 20c, 20d, 20e, 20f) relative to the other of the steering column (12, 12a, 12b) and the path (14, 14a, 14b).

## Description

### TECHNICAL FIELD

The invention relates to an energy absorber for steering column and more particularly to an energy absorber operable to absorb different amounts of energy associated with collapsing movement of the steering column.

### BACKGROUND OF THE INVENTION

Steering column assemblies for vehicles often include kinetic energy absorption devices that act to control the collapse of the column in the event of a crash to reduce the likelihood of injury to the driver. One form of an energy absorbing device comprises a metal strap that is bent and drawn over an anvil to absorb kinetic energy of a collapsing column. Examples of this type of energy absorbing device include U.S. Patent Nos. 6,170,874; 6,189,929; 6,322,103; and 6,652,002.

### SUMMARY OF THE INVENTION

The invention provides a steering column assembly for a vehicle. The steering column assembly includes a steering column operable to adjustably support a steering wheel in the vehicle. The steering column assembly is moveable along a path for collapsing movement relative to a vehicle in response to an impact situation. The steering column assembly also includes an energy absorber for dissipating energy associated with the collapsing movement of the steering column along the path. The energy absorber includes an anvil fixedly disposed relative to one of the steering column and the path. The energy absorber also includes a strap drawable over the anvil and substantially fixedly disposed relative to the other of the steering column and the path. The steering column assembly also includes at least one quick release bolt engaged with the strap to selectively release the strap relative to the other of the steering column and the path.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a first exemplary embodiment of the invention;
Figure 2 is an exploded view of a locking mechanism associated with the first exemplary embodiment of the invention;
Figure 3 is a partial cross-sectional view of the locking mechanism shown in Figure 2;
Figure 4 is a second perspective view of the first exemplary embodiment of the invention;
Figure 5 is a perspective view of a quick release bolt and strap and release capsule associated with the first exemplary embodiment of the invention;
Figure 6 is a second cross-sectional view of the first exemplary embodiment of the invention;
Figure 7 is a perspective view with partial cut-away of a second exemplary embodiment of the invention;
Figure 8 is a perspective view of an energy absorber according to an alternative embodiment of the invention;
Figure 9 is cross-sectional view of a quick release bolt associated with the alternative energy absorber shown in Figure 8;
Figure 10 is a side view of the quick release bolt shown in Figure 9 before the quick release bolt has been activated;
Figure 11 is a second side view of the quick release bolt shown in Figures 9 and 10 after the quick release bolt has been activated;
Figure 12 is a partial perspective view of a third exemplary embodiment of the invention;
Figure 13 is a perspective view of an energy absorber according to an alternative embodiment of the invention;
Figure 14 is a perspective view of an energy absorber according to an alternative embodiment of the invention; and
Figure 15 is a perspective view of an energy absorber according to an alternative embodiment of the invention.

### DESCRIPTION OF THE PREFERRED EMBODIMENT

A plurality of different embodiments of the invention are shown in the Figures of the application. Similar features are shown in the various embodiments of the invention. Similar features have been numbered with a common reference numeral and have been differentiated by an alphabetic designation. Also, to enhance consistency, features in any particular drawing share the same alphabetic designation even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

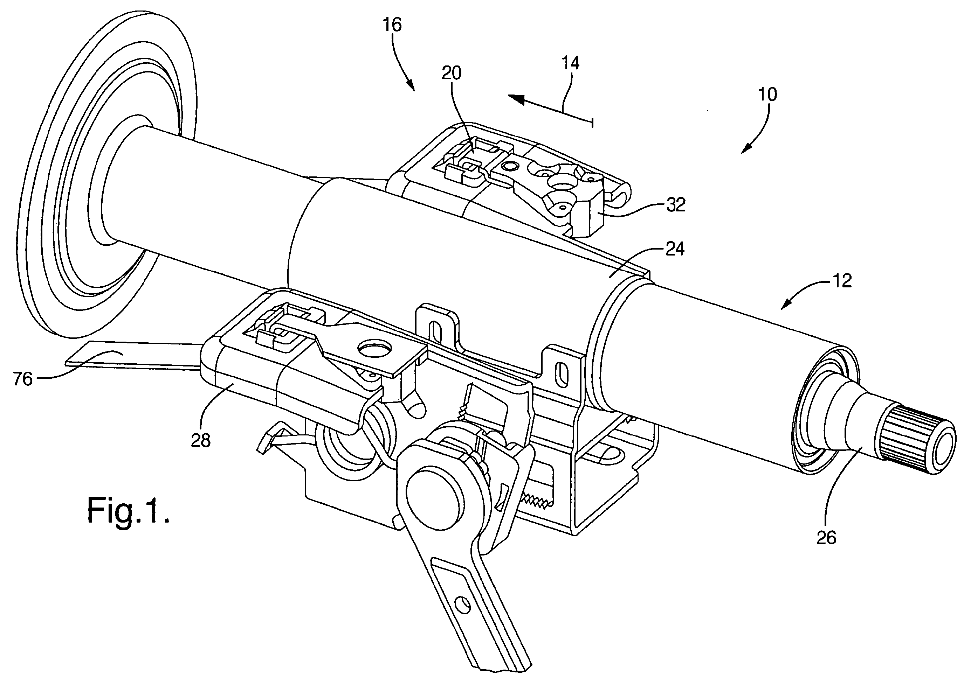

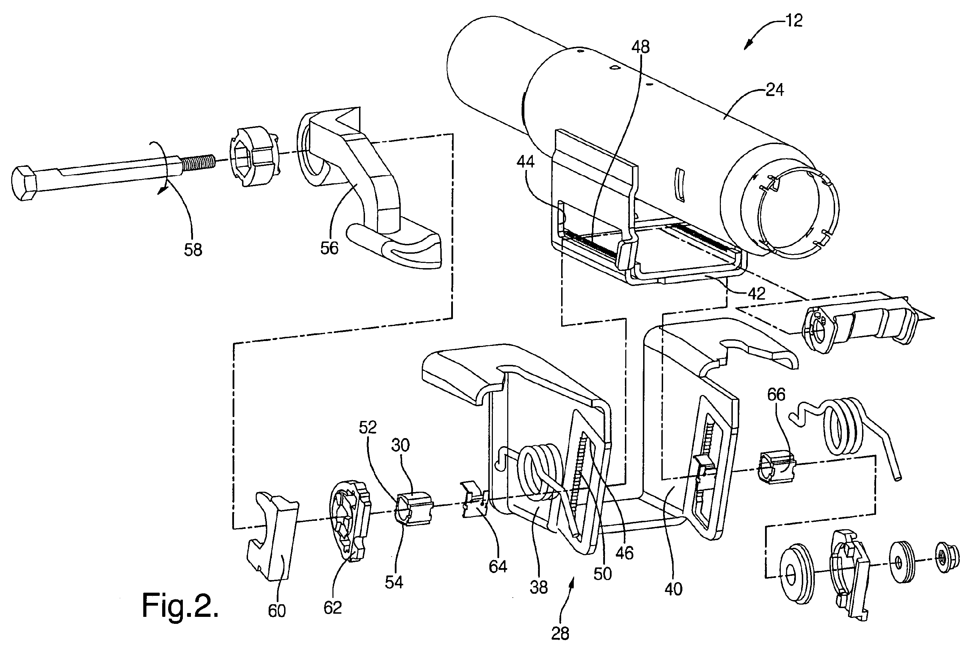

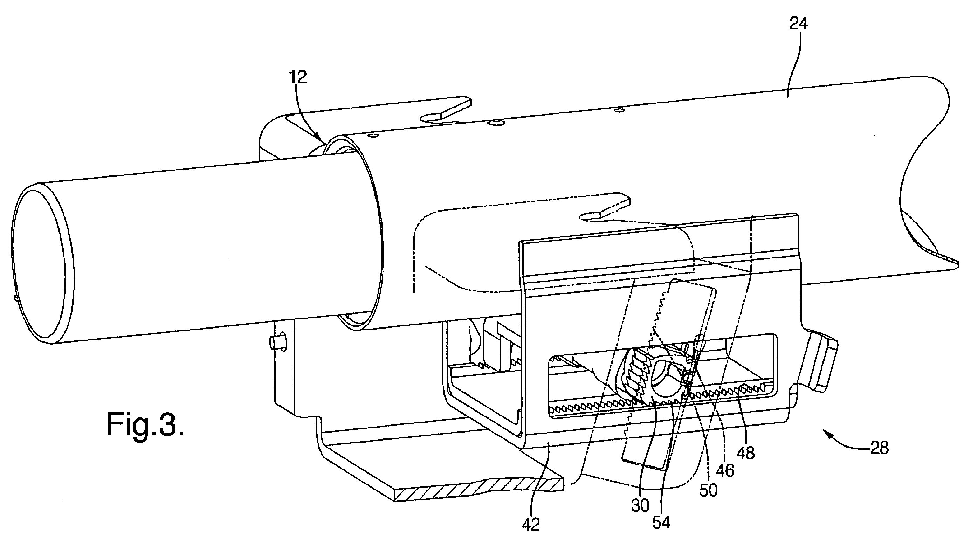

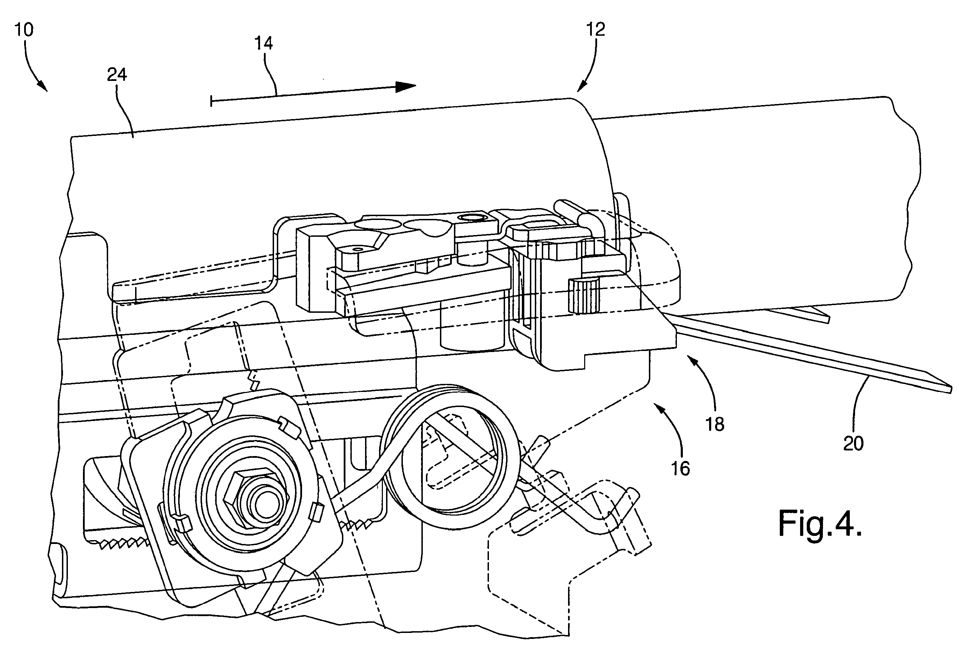

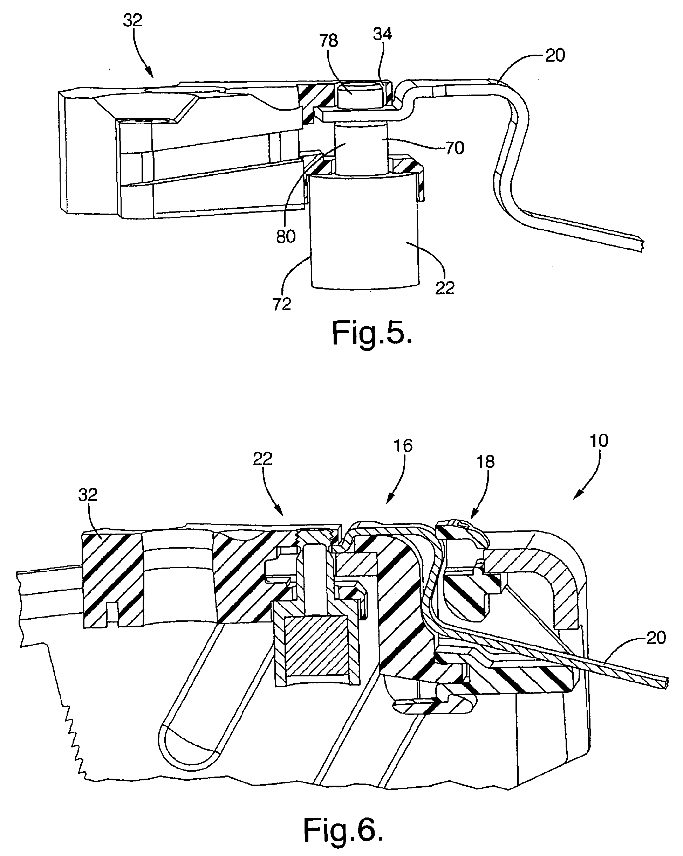

Referring now to Figures 1 - 6, a steering column assembly 10 for a vehicle includes a steering column 12 operable to adjustably support a steering wheel in the vehicle. The steering column assembly 10 is moveable along a path 14 for collapsing movement relative to a vehicle in response to an impact situation. The steering column assembly 10 also includes an energy absorber 16 for dissipating energy associated with the collapsing movement of the steering column 12 along the path 14. The energy absorber 16 includes an anvil 18 fixedly disposed relative to the steering column 12. The energy absorber 16 also includes a strap 20 drawable over the anvil 18 and substantially fixedly disposed relative to the path 14. The steering column assembly 10 also includes at least one quick release bolt 22 engaged with the strap 20 to selectively release the strap 20 relative to the other of the steering column 12 and the path 14.

The steering column assembly 10 also includes a steering column jacket 24 for encircling a steering shaft 26. A locking bracket 28 is disposed adjacent to the steering column jacket 24 along the path 14 and is moveable along the path 14 for the collapsing movement with the steering column jacket 24. A locking member 30 is supported in two-way movement by the locking bracket 28 between a first position to lock the locking bracket 28 and the steering column jacket 24 together and a second position spaced from the first position wherein the steering column jacket 24 is moveable relative to the locking bracket 28. At least one release capsule 32 is operably disposed to releasibly fix the locking bracket 28 to the vehicle along the path 14 and defining an aperture 34. The at least one quick release bolt 22 extends through the aperture 34.

In the first exemplary embodiment of the invention, the locking bracket 28 substantially surrounds the steering column jacket 24 and is releasibly engaged with a fixed portion of the vehicle. The locking bracket 28 includes side walls 38, 40. A bracket 42 is fixedly engaged with the steering column jacket 24 and is disposed between the side walls 38, 40. The steering column 12 moves relative to the locking bracket 28 during telescoping and/or raking movement.

The locking member 30 can prevent both telescoping movement and raking movement of the steering column 12 relative to the locking bracket 28. In alternative embodiments of the invention, the locking member may only prevent one of telescoping movement and raking movement. The exemplary embodiment of the invention includes a pair of second locking members 30, 66 disposed on opposite sides the bracket 42. The operation of the locking member 30 will be described in detail and operation of the locking member 66 is similar. The bracket 42 defines a first slot 44 and the locking bracket 28 defines a second slot 46. The locking member 30 extends through both the first and second slots 44, 46. The locking member 30 is disposed in both the first and second slots 44, 46 during movement between the first and second positions.

The first slot 44 includes a first locking portion 48 and the locking bracket 14 includes a second locking portion 50. The first locking portion 48 of the first exemplary embodiment of the invention defines a plurality of teeth. The second locking portion 50 also defines a plurality of teeth. The locking member 30 includes third and fourth locking portions 52, 54, each defining a plurality of teeth. When the locking member 30 is in the first position, the first locking portion 48 and the fourth locking portion 54 are interlocked and immovably associated with one another. Cooperation between the first locking portion 48 and the fourth locking portion 54 lock the steering column 12 with respect to telescoping adjustment. Also, the second locking portion 50 and the third locking portion 52 are interlocked and immovably associated with one another when the locking member 30 is in the first position. Cooperation between the second locking portion 50 and the third locking portion 52 lock the steering column 12 with respect to raking adjustment. When the locking member 30 is in the second position, the first locking portion 48 and the fourth locking portion 54 are spaced from one another and the second locking portion 50 and the third locking portion 52 are spaced from one another, permitting adjusting movement of the steering column 12.

The locking member 30 of the exemplary embodiment of the invention is moveable with a lever 56. The lever 56 cooperates with a pair of cams 60, 62. In response to rotation of the lever in a first direction, the cams 60, 62 push each other apart and the cam 62 urges the locking member 30 upwardly to separate the first and fourth locking portions 48, 54, as well as forwardly to separate the second and third locking portions 50, 52. In response to rotation of the lever 56 in a second direction opposite the first direction, the cams 60, 62 move closer together and the cam 62 retracts from the locking member 30. A biasing device 64 urges the locking member 30 to the first position. The biasing device 64 urges the locking member 30 downwardly to bring together the first and fourth locking portions 48, 54, as well as rearward to bring together the second and third locking portions 50, 52. In operation, a driver of the vehicle can rotate the lever 56 along an arcuate path of movement 58 to move the locking member 30 between the first position and the second position. When the locking member 30 is moved to the second position, the driver can adjust the position of the steering wheel in the vehicle telescopically and in rake. After the steering wheel has been moved to a desired position, the lever 56 can be rotated back along the path of movement 58 to move the locking member 30 to the first position.

During normal vehicle handling, the locking bracket 28 is fixed to the vehicle with the release capsule 32 and a second, similar release capsule shown in the Figures. In response to an impact situation, such as a vehicle crash, each of the quick release capsules 32 separates from the locking bracket 28. As a result, the locking bracket 28 moves with the steering column 12 during collapsing movement along the collapse path 16.

During normal vehicle handling, the quick release bolt 22 fixes one end of the strap 20 to the release capsule 32 and to the vehicle. The one end of the strap 20 is thus fixed to the collapse path 16. In response to an impact situation, such as a vehicle crash, the strap 20 can be drawn over the anvil 18 to dissipate energy. However, it may desirable to prevent energy from being dissipated by drawing the strap 20 over the anvil 18. For example, other energy absorbing structures may be present to dissipate a desired quantity of energy, such as a second strap 76. In such a situation, the quick release bolts 22 can be engaged to divide into two portions. The bolt 22 includes a shank portion 70 and a head portion 72. An incendiary or explosive charge can be disposed at least partially in the head portion 70. When the charged is engaged by an appropriate controller in the vehicle, the shank portion 72 can at least partially divide into a first portion 78 and second portion 80. Alternatively, the charge can substantially weaken the area where the first and second portions 78, 80 interconnect such that the strap 20 can shear the first and second portions 78, 80 apart during collapsing movement of the steering column 12.

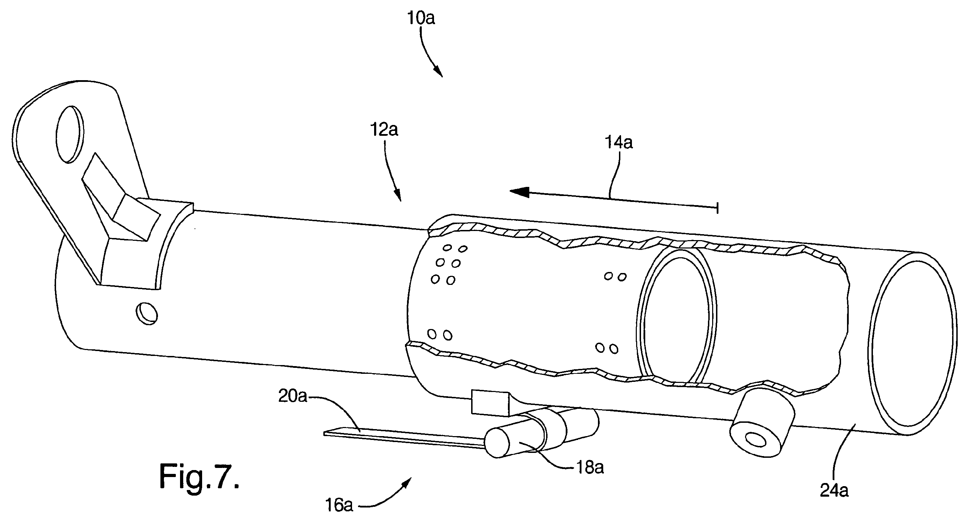

Referring now to Figure 7, a steering column assembly 10a for a vehicle includes a steering column 12a having a steering column jacket 24a and operable to adjustably support a steering wheel in the vehicle. The steering column assembly 10a is moveable along a path 14a for collapsing movement relative to a vehicle in response to an impact situation. The steering column assembly 10a also includes an energy absorber 16a for dissipating energy associated with the collapsing movement of the steering column 12a along the path 14a. The energy absorber 16a includes an anvil 18a fixedly disposed relative to the path 14a. The energy absorber 16a also includes a strap 20a drawable over the anvil 18a and substantially fixedly disposed relative to the steering column 12a. The steering column assembly 10a also includes at least one quick release bolt (not visible) engaged with the strap 20a to selectively fix and release one end of the strap 20a relative to the steering column 12a.

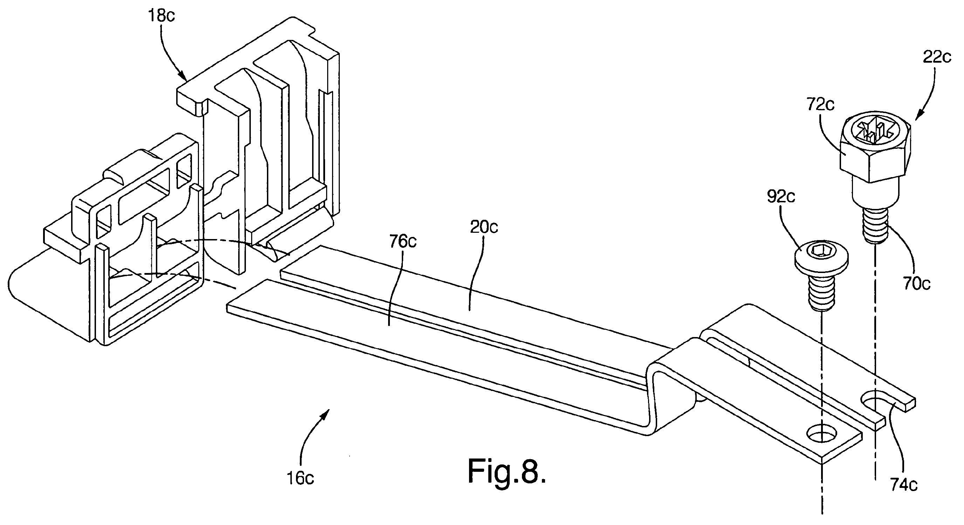

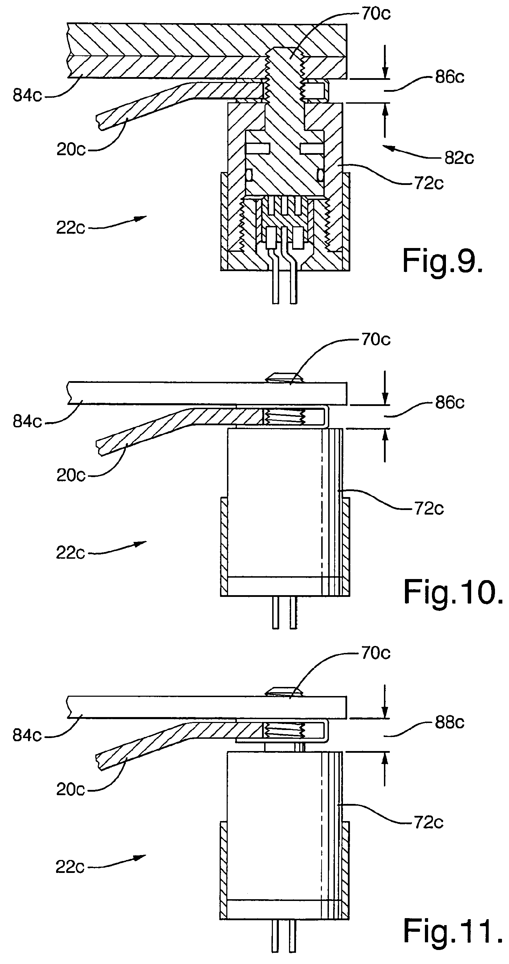

Referring now to Figures 8 - 11, an alternative energy absorber 16c includes an anvil 18c fixedly disposed relative to one of a steering column, such as steering column 12, and a path, such as path 14. The energy absorber 16c also includes a strap 20c drawable over the anvil 18c and substantially fixedly disposed relative to one of a steering column, such as steering column 12, and a path, such as path 14. A quick release bolt 22c is engaged with the strap 20c to selectively release the strap 20c relative to one of the steering column and the path. The energy absorber 16c also includes a second strap 76c fixedly disposed relative to one of a steering column, such as steering column 12, and a path, such as path 14. The second strap 76c and the strap 20c are disposed in parallel to one another. A second bolt 92c fixes the second strap 76c relative to one of the steering column and the path.

The bolt 22c includes a shank portion 70c and a head portion 72c. The head portion 72c is moveable relative to the shank portion 70c. The exemplary bolt 22c is incendiary such that when an internal charge 82 is fired, the head portion 72c can move relative to the shank portion 70c. Prior to firing the charge, the shank portion 70c and a head portion 72c are substantially fixed relative to one another. The unfired bolt 22c can be threadingly engaged with a vehicle structure 84c. The strap 20c can be pressed between the structure 84c and the head portion 72c such that the strap 20c is fixed relative to the head portion 72c and will be drawn over the anvil 18c during collapsing movement of the steering column along the collapse path. A first distance 86 is defined between the structure 84c and the head portion 72c before the bolt 22c is fired. During an impact situation, the controller of the energy absorber 16c may determine that the strap 76c will dissipate the desired quantity of energy. In such a situation, the bolt 22c can be fired. A second distance 88c greater than the first distance 86c is defined between the structure 84c and the head portion 72c after the bolt 22c is fired. When the bolt 22c is fired, the pressing force acting on the strap 20c diminishes. The strap 20c includes an open slot 74c. The shank portion 70c is received in the slot 74c. When the bolt 22c is fired, the strap 20c can move with the steering column or be fixed to the path, wherein the strap 20c will not dissipate energy. The bolt 22c will move out of the slot 74c or the strap 20c will move away from the bolt 22c.

The exemplary bolt 22c can be acquired from Special Devices, Inc., of Mesa, Arizona. While the bolt 22c has been described as incendiary, an alternative form of the bolt could be a solenoid-like with a pin operable to extend into and retract from a hole defined by the strap 20c. Also, while the straps 20c and 76c have been shown to be substantially the same size and have a substantially constant cross-section, differently sized straps can be used together in alternative embodiments of the invention as well as straps having variable cross-sections.

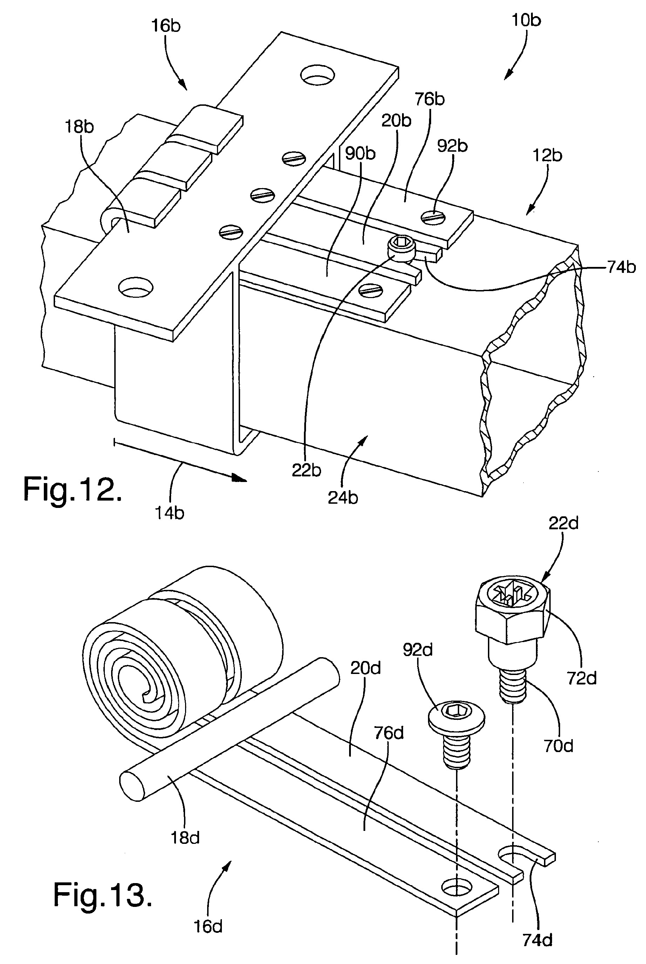

Referring now to Figure 12, a steering column assembly 10b for a vehicle includes a steering column 12b having a steering column jacket 24b and operable to adjustably support a steering wheel in the vehicle. The steering column assembly 10b is moveable along a path 14b for collapsing movement relative to a vehicle in response to an impact situation. The steering column assembly 10b also includes an energy absorber 16b for dissipating energy associated with the collapsing movement of the steering column 12b along the path 14b. The energy absorber 16b includes an anvil 18b fixedly disposed relative to the path 14b. The energy absorber 16b also includes a strap 20b drawable over the anvil 18b and substantially fixedly disposed relative to the steering column 12b. The steering column assembly 10b also includes at least one quick release bolt 22b engaged with the strap 20b to selectively fix and release one end of the strap 20b relative to the steering column 12b. The bolt 22b is structured similarly and operates similarly with respect to the bolt 22c. The strap 20b includes a slot 74b for receiving the bolt 22b and the energy absorber 16b includes a second strap 76b fixedly engaged with the steering column jacket 24b with a second bolt 92b. The energy absorber 16b includes a third strap 90b fixedly engaged with the steering column jacket 24b. The straps 20b, 76b and 90b are J-straps and dissipate energy by bending around the anvil 18b as well as by frictionally engaging the anvil 18b during bending.

Referring now to Figure 13, an alternative energy absorber 16d includes an anvil 18d fixedly disposed relative to one of a steering column, such as steering column 12, and a path, such as path 14. The energy absorber 16d also includes a strap 20d drawable over the anvil 18d and substantially fixedly disposed relative to one of a steering column, such as steering column 12, and a path, such as path 14. A quick release bolt 22d is engaged with a slot 74d of the strap 20d to selectively release the strap 20d relative to one of the steering column and the path. The energy absorber 16d also includes a second strap 76d fixedly disposed relative to one of a steering column, such as steering column 12, and a path, such as path 14. The second strap 76d and the strap 20d are disposed in parallel to one another. A second bolt 92d fixes the second strap 76d relative to one of the steering column and the path. The bolt 22d is structured similarly and operates similarly with respect to the bolt 22c. The straps 20d and 76d are coiled and are unwound during energy dissipation.

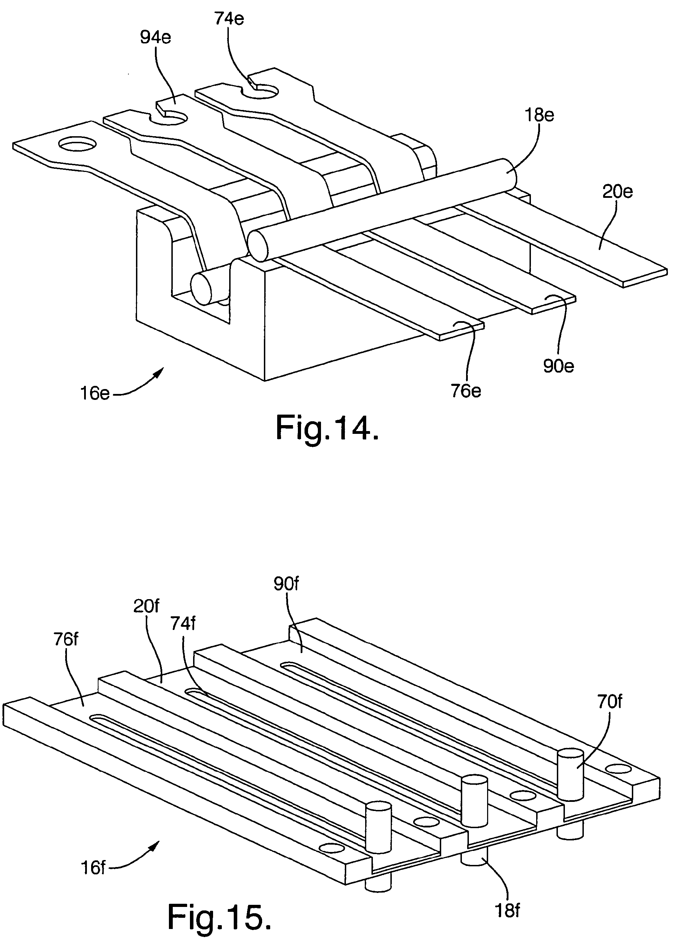

Referring now to Figure 14, an alternative energy absorber 16e includes an anvil 18e fixedly disposed relative to one of a steering column, such as steering column 12, and a path, such as path 14. The energy absorber 16e also includes a strap 20e drawable over the anvil 18e and substantially fixedly disposed relative to one of a steering column, such as steering column 12, and a path, such as path 14. A quick release bolt, such as bolt 22c, is engaged with a slot 74e of the strap 20e to selectively release the strap 20e relative to one of the steering column and the path. The energy absorber 16e also includes a second strap 76e fixedly disposed relative to one of a steering column, such as steering column 12, and a path, such as path 14. The second strap 76e and the strap 20e are disposed in parallel to one another. A second bolt fixes the second strap 76e relative to one of the steering column and the path. The energy absorber 16e includes a third strap 90e substantially the same as the strap 20e. The strap 90e is drawable over the anvil 18e and is substantially fixedly disposed relative to one of a steering column, such as steering column 12, and a path, such as path 14. A quick release bolt, such as bolt 22c, is engaged with a slot 94e of the strap 90e to selectively release the strap 90e relative to one of the steering column and the path.

Referring now to Figure 15, an alternative energy absorber 16f includes an anvil 18f fixedly disposed relative to one of a steering column, such as steering column 12, and a path, such as path 14. The energy absorber 16f also includes a strap 20f. The strap 20f includes a closed slot 74f and the anvil 18f is moveable through the slot 74f to dissipate energy. The slot 74f includes and enlarged, hole-like opening to receive the anvil 18f and a narrowed, slit-like portion. The anvil 18f is wider than the slit-like portion and expands the slit-like portion during movement along the strap 20f. The anvil 18f moves along the strap 20f in response to collapsing movement of a steering column, such as steering column 12, relative to a path, such as path 14. In an alternative embodiment, the anvil 18f can be fixedly disposed along the path and the strap 20f can be moved to expand the slit-like portion and dissipate energy.

A quick release bolt, such as bolt 22, can be engaged with the anvil 18f. For example, when the bolt associated with the anvil 18f is fired, the anvil 18f would be substantially fixed relative to the strap 20f. As a result, the slit-like portion would not be expanded. The energy absorber 16f also includes second and third straps 76f and 90f having closed slots. Either or both of the straps 76f and 90f can be associated with anvils associated with quick release bolts.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A steering column assembly (10, 10a, 10b) for a vehicle comprising:
a steering column (12, 12a, 12b) operable to adjustably support a steering wheel in the vehicle and moveable along a path (14, 14a, 14b) for collapsing movement relative to a vehicle in response to an impact situation;
an energy absorber (16, 16a, 16b, 16c, 16d, 16e, 16f) for dissipating energy associated with said collapsing movement of said steering column (12, 12a, 12b) along said path (14, 14a, 14b) and including an anvil (18, 18a, 18b, 18c, 18d, 18e, 18f) fixedly disposed relative to one of said steering column (12, 12a, 12b) and said path (14, 14a, 14b) and a strap (20, 20a, 20b, 20c, 20d, 20e, 20f) drawable over said anvil (18, 18a, 18b, 18c, 18d, 18e, 18f) and substantially fixedly disposed relative to the other of said steering column (12, 12a, 12b) and said path (14, 14a, 14b); and
at least one quick release bolt (22, 22b, 22c, 22d) engaged with said strap (20, 20a, 20b, 20c, 20d, 20e, 20f) to selectively release said strap (20, 20a, 20b, 20c, 20d, 20e, 20f) relative to said other of said steering column (12, 12a, 12b) and said path (14, 14a, 14b).

2. The steering column assembly (10, 10a, 10b) of claim 1 wherein said at least one quick release bolt (22, 22b, 22c, 22d) is further defined as being incendiary.

3. The steering column assembly (10, 10a, 10b) of claim 1 wherein said at least one quick release bolt (22) is further defined as being selectively divisible into at least two portions (78, 80) independently of said collapsing movement of said steering column (12, 12a, 12b) along said path (14, 14a, 14b).

4. The steering column assembly (10, 10a, 10b) of claim 1 wherein said steering column (12, 12a, 12b) further comprises:
a steering column jacket (24, 24a, 24b) for encircling a steering shaft (26);
a locking bracket (28) adjacent to said steering column jacket (24, 24a, 24b) along said path (14, 14a, 14b) and moveable along said path (14, 14a, 14b) for said collapsing movement with said steering column jacket (24, 24a, 24b);
a locking member (30) supported in two-way movement by said locking bracket (28) between a first position to lock said locking bracket (28) and said steering column jacket (24, 24a, 24b) together and a second position spaced from said first position wherein said steering column jacket (24, 24a, 24b) is moveable relative to said locking bracket (28); and
at least one release capsule (32) operable to releasibly fix said locking bracket (28) to the vehicle along said path (14, 14a, 14b) and defining an aperture (34), wherein said at least one quick release bolt (22, 22b, 22c, 22d) extends through said aperture (34).

5. The steering column assembly (10, 10a, 10b) of claim 1 wherein said at least one quick release bolt (22b, 22c, 22d) is further defined as including a shank portion (70, 70c, 70d, 70f) and a head portion (72, 72c, 72d) moveably engaged with said shank portion (70, 70c, 70d, 70f).

6. The steering column assembly (10, 10a, 10b) of claim 1 wherein said strap (20, 20a, 20b, 20c, 20d, 20e, 20f) includes a slot (74b, 74c, 74d, 74e, 74f) and said at least one quick release bolt (22, 22b, 22c, 22d) is further defined as engaging said slot (74b, 74c, 74d, 74e, 74f).

7. The steering column assembly (10, 10a, 10b) of claim 6 wherein said slot (74b, 74c, 74d, 74e) is further defined as an open slot (74b, 74c, 74d, 74e).

8. The steering column assembly (10, 10a, 10b) of claim 6 wherein said slot (74f) is further defined as a closed slot (74f).

9. The steering column assembly (10, 10a, 10b) of claim 6 wherein said energy absorber (16, 16a, 16b, 16c, 16d, 16e, 16f) further comprises:
a second strap (76, 76b, 76c, 76d, 76e, 76f) fixedly disposed relative to one of said steering column (12, 12a, 12b) and said path (14, 14a, 14b).

10. The steering column assembly (10, 10a, 10b) of claim 9 wherein said strap (20, 20a, 20b, 20c, 20d, 20e, 20f) and said second strap (76, 76b, 76c, 76d, 76e, 76f) are disposed in parallel to one another.

11. The steering column assembly (10, 10a, 10b) of claim 10 further comprising:
a second bolt (92b, 92c, 92d) fixing said second strap (76, 76b, 76c, 76d, 76e, 76f) relative to one of said steering column (12, 12a, 12b) and said path (14, 14a, 14b).
